# EUROPEAN PATENT SPECIFICATION

(11) **EP 1 415 026 B1**
(45) Date of publication and mention of the grant of the patent: **12.09.2007**
(21) Application number: 02767422.5
(22) Date of filing: 09.08.2002
(51) Int. Cl.: D01F 2/00, D01D 5/088, D01D 5/06, C08J 5/18, C08L 1/02

(54) **PROCESS FOR THE PREPARATION OF CELLULOSIC SHAPED BODIES**
VERFAHREN ZUR HERSTELLUNG ZELLULOSISCHER FORMKÖRPER
PROCEDE DE PREPARATION DE CORPS PROFILES CELLULOSIQUES

(30) Priority: 11.08.2001 DE 10139674
(43) Date of publication of application: 06.05.2004
(73) Proprietor: LENZING AKTIENGESELLSCHAFT, 4860 Lenzing (AT)
(72) Inventor: LIBERA, Ulrich, Matthias, 63846 Laufach (DE); FRISCHMANN, Günter, 64404 Bickenbach (DE); PITOWSKI, Hans, Jurgen, 63897 Miltenberg (DE); WACHSMANN, Ulrich, Wigand, 63820 Elsenfeld (DE); HAHN, Ulrich, Günther, 63906 Erlenbach (DE)
(74) Representative: Spencer, Michael David
(86) International application number: PCT/EP2002/009432
(87) International publication number: WO 2003/014436

(56) References cited:
- WO-A-93/19230
- WO-A-96/17118
- DE-A- 19 700 169
- PATENT ABSTRACTS OF JAPAN vol. 017, no. 349 (C-1078), 2 July 1993 (1993-07-02) & JP 05 044104 A (UNITIKA LTD), 23 February 1993 (1993-02-23)

## Description

### Field of the invention

The present invention relates to a process for the preparation of cellulosic shaped bodies wherein a solution of cellulose in a tertiary amine N-oxide and, optionally, water is shaped in the hot state and the shaped solution passes through a gaseous medium for the purpose of cooling prior to being introduced into a coagulation bath, the gaseous medium flowing through the shaped solution from a gas inlet side to a gas outlet side.

### Background art

A process for the cooling of cellulosic shaped bodies by means of a gaseous medium is described in WO 93/19230, for example, in which process the cooling takes place immediately after the shaping. This process is intended to reduce the stickiness (tackiness) of the freshly extruded shaped bodies, so that in the preparation of cellulosic filaments a spinneret with a high spinning hole density may be used. For cooling, the shaped solution is preferably exposed to a gas stream.

Cooling of the hot shaped solution already takes place when the shaped solution leaves the shaping device, for example a spinneret, in which temperatures of above 70°C typically prevail, and comes into a so-called air gap. The air gap is the region between the shaping device and a coagulation bath into which the cellulose is precipitated. The temperature in the air gap is lower than in the spinneret but, because of thermal radiation by the spinneret and the heating up of the air that results from the enthalpy stream from the shaped bodies, it is significantly higher than room temperature. As a result of the continuous evaporation of water, which commonly is used in addition to tertiary amine N-oxide in the coagulation bath, warm and humid conditions prevail in the air gap. The measure proposed in WO 93/19230, to cool the shaped solution immediately after shaping, effects a more rapid cooling, so that the stickiness of the shaped solution is reduced more rapidly.

WO 96/17118 and its US counterpart, US-A-5,902,532 discloses a method for the preparation of cellulosic shaped bodies by shaping a solution of cellulose in a tertiary amine N-oxide and, optionally, water in the hot state and cooling the thus shaped solution with air before it is introduced into a coagulation bath. According to that disclosure use is made of conditioned air with a water content of from 0.1 to 7 g water vapour per kg of dry air and a relative humidity of less than 85%. Advantageously, the conditioned air is forced through a bundle of freshly spun fibres or filaments by a combination of blowing in and removal by suction. In this process the air flows at an angle of 0 to 120° preferably 90°, relative to the direction of movement of the shaped solution, the angle of 0° corresponding to a flow opposite to the running direction of the formed solution. The process disclosed in WO 96/17118 produces a more effective cooling of the freshly extruded shaped bodies with less conglutination, and the filaments obtained have cross-sectional areas with a low coefficient of variation.

Although the cooling process described in WO 96/17118 is a good process as such, there is still room for improvements. Thus, with an incident flow of conditioned air perpendicular (transverse) to the direction of movement of the shaped solution the side of the shaped solution opposite to the incident air flow side is often not reached adequately, or not reached quickly enough, by the conditioned air. This is especially the case when the process is carried out with a comparatively low flow velocity of the conditioned air and/or when, for example, a large number of filaments is extruded. When cellulosic multifilaments are extruded, for example, despite intensive incident flow (blowing) of the conditioned air, more or less extensive conglutination can occur in the case of the filaments on the side opposite to the incident air flow side, leading to an impairment of the stability of the process, because permeation of the air through the solution is not guaranteed. In principle, the intensity of the cooling could of course be increased by increasing the incident flow volume of the conditioned air and/or by increasing the length of the air gap. Such measures, however, at the same time entail a risk of greater intermingling of the shaped solution, and thus of the filaments for example, and for that reason they are often undesirable.

### Disclosure of the invention

The present invention therefore seeks at least to reduce the drawbacks of the the prior art processes.

According to the invention there is provided a process for the preparation of celluosic shaped bodies such as described in the opening paragraph, which is characterised in that the gaseous medium on the gas outlet side is removed by suction at the gas outlet side in a direction substantially parallel to the direction of movement of the shaped solution. The direction may be 0° relative to the direction of the movement of the shaped solution that is to any parallel to and in the same direction as the movement of the shaped solution or it may differ from 0° by a small angle, for example of up to 5° or 10° or more, but less than 45°.

In the process according to the invention it is moreover preferred if the angle of flow of the gaseous (cooling) medium flowing out of the shaped solution (suction side) changes relative to the angle of the air flowing into the shaped solution because of the removal by suction. This change of direction results in a better flow of the gaseous medium at the side of the shaped solution situated opposite to the gaseous medium inflow (blowing) side.

As will be explained in greater detail below, in such a process there is preferably removal by suction, for example through a perforated plate immediately following the spinneret.

Within the framework of the present invention it is especially preferred when the gaseous medium on the gas inlet (blowing) side meets the shaped solution at an angle from about 45° to about 135°, more preferably at about 90°, relative to the direction of movement of the shaped solution. At an incident flow angle of gaseous medium of about 90° and a removal by suction of gaseous medium on the gas outlet side of 0° relative to the direction of travel of the formed solution, the removal by suction therefore takes place turned by about 90° relative to the blowing in, which leads to excellent flow of the gaseous medium through all regions of the shaped solution.

In principle, of course, the flow of gaseous medium through the shaped solution can be triggered by convection, e.g. by movement of air, or else by suction of the shaped solution (so-called "self-suction") on the gaseous medium. By self-suction the shaped solution for instance is first permeated at an angle of 0°, i.e. in its direction of movement. However, it is preferred that the flow of the gaseous medium through the shaped solution is achieved by blowing in of the gaseous medium at the gas inlet side. This makes it possible to adjust various parameters of the gaseous medium, for example the blowing angle, the speed, the temperature, and, optionally, also the water content, by conditioning the gaseous medium blown in.

Generally, the blowing in takes place along the entire length of the air gap, i.e. between the shaping device, for example the spinneret, and the coagulation bath. Of course, it is also possible to expose the shaped solution to the blowing in over only part of this length. Thus, for example, the gaseous medium can be blown in only in the first section of the air gap, i.e. the section which immediately adjoins the shaping device.

In order to carry out the process according to the invention as efficiently as possible, it is desirable to have a larger volume of gaseous medium removed by suction on the gas outlet side than is blown in. This guarantees a quantitative flow of the gaseous medium in the direction of removal by suction, since a larger volume flow is removed by suction than is blown in.

It has proved especially advantageous in this process for the volume of gaseous medium removed by suction on the gas outlet side to be at least twice, preferably three times, as large as is blown in.

As mentioned earlier, the present invention proves well suited to those processes which have comparatively low speeds of the gaseous medium. For that reason it is preferred that the permeation of the shaped solution takes place at a speed of the gaseous medium of from 0.5 to 2 m/s. This has the advantage that undesired intermingling of the shaped solution is largely avoided.

As explained earlier, the freshly extruded shaped bodies are cooled in the air gap in order to reduce their stickiness (tackiness) quickly in this way. To be able to cool the shaped solution at all, the stream of gaseous medium naturally has to have a temperature below the temperature of the shaped solution. In the process according to the invention it has proved desirable for the permeation to take place at a temperature of the gaseous medium of from 0 to 40°C, preferably from 20 to 30°C.

In principle, any known or conventional gaseous media can be used for cooling, for example inert gases, such as nitrogen, carbon dioxide or argon; however, it is generally preferred that the gaseous medium be air.

Because, as is known, it is not only the temperature but also the water content of the gaseous medium and its relative humidity which have a significant effect on the properties of the cellulosic shaped bodies, the gaseous medium preferably is conditioned, i.e. adjusted to a particular moisture content, prior to use.

When the gaseous medium is air, it is preferred for the air to be adjusted to a relative humidity of from 5 to 30 %. The conditioning of the air, i.e. the adjustment of the water content and the relative humidity at a specified temperature, is known to the skilled person and can be taken for instance from WO 96/17118, with care being taken that this conditioning takes place as evenly as possible.

The process according to the invention permits the preparation in an advantageous manner of fibres, especially filaments, so-called endless fibres, staple fibres, films, hollow fibres, and membranes, for example for use in dialysis, oxygenation or filtration. Shaping a solution into a desired cellulosic shaped body can be done with known spinnerets for the preparation of fibres, slit dies or hollow fibre spinnerets. Subsequent to the shaping, i.e. prior to its introduction into the coagulation bath, the shaped solution may be drawn.

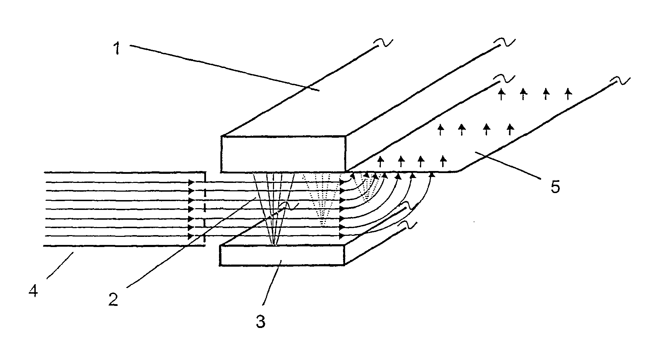

### Descripton of the drawing

The invention is explained in greater detail with reference to the accompanying drawing, which schematically shows the construction of an apparatus for carrying out a process in the opposite direction to that according to the invention.

In the drawing a spinneret 1 is constructed with several spinning positions, from each of which a shaped solution 2 is spun into a gas, for instance ambient air. The shaped solution is then immersed in a coagulation liquid, present in coagulation bath 3. The blowing in of the gaseous medium into the shaped solution 2 takes place via an insulated pipe 4 on the gas inlet side, which is brought up from an air-conditioning plant. The arrows drawn in the figure schematically indicate the direction of the blowing in. The blowing in takes place approximately perpendicular to the direction of movement of the shaped solution 2 and over the entire length of the spinneret 1. The removal by suction of the gaseous medium blown in takes place on the gas outlet side turned by about 90° towards the blowing-in direction (vertically upwards at the edge of spinneret 1 and thus in the opposite direction to the direction of movement of the shaped solution as shown in the drawing). In this process the gaseous medium is removed by suction via a perforated sheet 5, which is mounted immediately following the spinneret 1. The removal by suction likewise takes place over the entire length of the spinneret. The perforated sheet 5 used for the removal by suction joins flush with the spinneret 1, i.e. forms a plane with it. Through the removal by suction and the flush arrangement of the extraction and the spinneret 1 good accessibility of the spinneret 1 and the individual spinning positions is provided from each side, but especially from the longitudinal side of the spinneret 1. As a result, the handling of the equipment, e.g. when stringing up, separating filaments and servicing spinneret 1, is clearly made easier.

## Claims

1. A process for the preparation of cellulosic shaped bodies wherein a solution of cellulose in a tertiary amine N-oxide and, optionally, water is shaped in the hot state and the shaped solution is cooled with a gaseous medium prior to being introduced into a coagulation bath,the gaseous medium flowing through the shaped solution from a gas inlet side to a gas outlet side, **characterised in that** the gaseous medium is removed by suction at the gas outlet side in a direction parallel to or at an angle of less than 45° to the direction of movement of the shaped solution.

2. A process according to claim 1, **characterised in that** the gaseous medium flows into the shaped solution at an angle of from about 45° to about 135°, preferably about 90°, relative to the direction of movement of the shaped solution.

3. A process according to claim 1 or 2, **characterised in that** the flow of the gaseous medium into the shaped solution is achieved by blowing in.

4. A process according to claim 3, **characterised in that** a greater volume of gaseous medium is removed by suction than is blown in.

5. A process according to claim 4, **characterised in that** the volume of gaseous medium removed by suction is at least twice, preferably three times, as great as the volume blown in.

6. A process according to any of claims I to 5, **characterised in that** the incident gaseous medium has a velocity in the range from 0.5 to 2 m/s.

7. A process according to any of claims 1 to 6, **characterised in that** the incident temperature of the gaseous medium is from 0 to 40°C, preferably from 20 to 30°C.

8. A process according to any of claims 1 to 7, **characterised in that** the gaseous medium is air.

9. A process according to claim 8, **characterised in that** the air has a relative humidity of 5 to 30%.

10. A process according to any of claims 1 to 9, **characterised in that** the shaped bodies produced are fibres, more particularly filaments, films, hollow fibres, or membranes.

## Patentansprüche

1. Verfahren zur Herstellung zellulosischer Formkörper, bei dem eine Lösung aus Zellulose in einem tertiären Amin-N-Oxid und optional Wasser in dem heißen Zustand geformt wird und die geformte Lösung mit einem gasförmigen Medium gekühlt wird, bevor sie in ein Koagulationsbad eingebracht wird, wobei das gasförmige Medium durch die geformte Lösung von einer Gaseinlassseite zu einer Gasauslassseite strömt, **dadurch gekennzeichnet, dass** das gasförmige Medium durch Absaugung an der Gasauslassseite in eine Richtung entfernt wird, die parallel oder mit einem Winkel von weniger als 45° zu der Bewegungsrichtung der geformten Lösung vorgesehen ist.

2. Verfahren nach Anspruch 1, **dadurch gekennzeichnet, dass** das gasförmige Medium in die geformte Lösung mit einem Winkel von etwa 45° bis etwa 135°, bevorzugt etwa 90°, relativ zu der Bewegungsrichtung der geformten Lösung strömt.

3. Verfahren nach Anspruch 1 oder 2, **dadurch gekennzeichnet, dass** der Strom des gasförmigen Mediums in die geformte Lösung durch Einblasen erzielt wird.

4. Verfahren nach Anspruch 3, **dadurch gekennzeichnet, dass** ein größeres Volumen des gasförmigen Mediums durch Absaugung entfernt als eingeblasen wird.

5. Verfahren nach Anspruch 4, **dadurch gekennzeichnet, dass** das Volumen des gasförmigen Mediums, das durch Absaugung entfernt wird, zumindest zweimal, bevorzugt dreimal, so groß wie das eingeblasene Volumen ist.

6. Verfahren nach einem der Ansprüche 1 bis 5, **dadurch gekennzeichnet, dass** das einströmende gasförmige Medium eine Geschwindigkeit im Bereich von 0,5 bis 2 m/s aufweist.

7. Verfahren nach einem der Ansprüche 1 bis 6, **dadurch gekennzeichnet, dass** die Temperatur des einströmenden gasförmigen Mediums von 0 bis 40° C, bevorzugt von 20 bis 30° C beträgt.

8. Verfahren nach einem der Ansprüche 1 bis 7, **dadurch gekennzeichnet, dass** das gasförmige Medium Luft ist.

9. Verfahren nach Anspruch 8, **dadurch gekennzeichnet, dass** die Luft eine relative Feuchtigkeit von 5 bis 30 % aufweist.

10. Verfahren nach einem der Ansprüche 1 bis 9, **dadurch gekennzeichnet, dass** die hergestellten Formkörper Fasern, insbesondere Fäden, Folien, Hohlfasern oder Membranen sind.

## Revendications

1. Procédé pour la préparation de corps cellulosiques dans lequel une solution de cellulose dans un N-oxyde d'amine tertiaire, et éventuellement dans l'eau, est formée à l'état chaud et la solution formée est refroidie avec un milieu gazeux avant d'être introduite dans un bain de coagulation, le milieu gazeux traversant la solution formée du côté entrée au côté sortie des gaz, **caractérisé en ce que** le milieu gazeux est retiré par aspiration du côté sortie des gaz dans une direction parallèle ou formant un angle inférieur à 45° par rapport à la direction de mouvement de la solution formée.

2. Procédé selon la revendication 1, **caractérisé en ce que** le milieu gazeux s'écoule dans la solution formée à un angle d'environ 45° à environ 135°, de préférence environ 90°, par rapport à la direction de mouvement de la solution formée.

3. Procédé selon la revendication 1 or 2, **caractérisé en ce que** l'écoulement du milieu gazeux dans la solution formée est réalisé par soufflage.

4. Procédé selon la revendication 3, **caractérisé en ce qu'**un plus grand volume de milieu gazeux est retiré par aspiration que par soufflage.

5. Procédé selon la revendication 4, **caractérisé en ce que** le volume de milieu gazeux retiré par aspiration est au moins deux fois, de préférence trois fois, supérieur au volume soufflé.

6. Procédé selon l'une quelconque des revendications 1 à 5, **caractérisé en ce que** le milieu gazeux incident a une vitesse dans la plage de 0,5 à 2 m/s.

7. Procédé selon l'une quelconque des revendications 1 à 6, **caractérisé en ce que** la température incidente du milieu gazeux va de 0 à 40°C, de préférence de 20 à 30°C.

8. Procédé selon l'une quelconque des revendications 1 à 7, **caractérisé en ce que** le milieu gazeux est de l'air.

9. Procédé selon la revendication 8, **caractérisé en ce que** l'air a une humidité relative de 5 à 30%.

10. Procédé selon l'une quelconque des revendications 1 à 9, **caractérisé en ce que** les corps moulés obtenus sont des fibres, plus particulièrement des filaments, des films, des fibres creuses ou des membranes.
